(19) Europäisches Patentamt
European Patent Office
Office européen des brevets

(11) Veröffentlichungsnummer : **0 394 786 B1**

(12) # EUROPÄISCHE PATENTSCHRIFT

(45) Veröffentlichungstag der Patentschrift :
**20.10.93 Patentblatt 93/42**

(51) Int. Cl.[5] : **C09D 133/06,** C09D 135/00

(21) Anmeldenummer : **90107135.7**

(22) Anmeldetag : **13.04.90**

(54) **Bindemittelkombinationen, ein Verfahren zu ihrer Herstellung und ihre Verwendung.**

(30) Priorität : **26.04.89 DE 3913679**

(43) Veröffentlichungstag der Anmeldung :
**31.10.90 Patentblatt 90/44**

(45) Bekanntmachung des Hinweises auf die Patenterteilung :
**20.10.93 Patentblatt 93/42**

(84) Benannte Vertragsstaaten :
**AT BE CH DE ES FR GB IT LI NL SE**

(56) Entgegenhaltungen :
**EP-A- 0 001 088**
**EP-A- 0 284 953**

(73) Patentinhaber : **BAYER AG**
**D-51368 Leverkusen (DE)**

(72) Erfinder : **Wamprecht, Christian, Dr.**
**Regattastrasse 20**
**D-4040 Neuss 22 (DE)**
Erfinder : **Blum, Harald, Dr.**
**Auf dem Westkamp 1**
**D-4175 Wachtendonk 1 (DE)**
Erfinder : **Pedain, Josef, Dr.**
**Haferkamp 6**
**D-5000 Köln 80 (DE)**

EP 0 394 786 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft unter dem Einfluß von Feuchtigkeit aushärtbare Bindemittelkombinationen, bestehend im wesentlichen aus Anhydrid- und Carbonatgruppen enthaltenden Copolymerisaten sowie Verbindungen, welche zur Vernetzung mit den Copolymerisaten geeignet sind und im wesentlichen Aminogruppen in blockierter Form aufweisen, ein Verfahren zur Herstellung dieser Bindemittelkombinationen und ihre Verwendung als Bindemittel in Beschichtungsmitteln und Dichtmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmassen ist aus der EP-A-48 128 bereits bekannt. Der Gedanke, das Prinzip dieser Veröffentlichung auf die Umsetzung von Aminen mit Anhydriden zu übertragen, scheitert jedoch an der Tatsache, daß die Umsetzung von Aminen mit Anhydriden eine bereits bei Raumtemperatur sehr rasch ablaufende Reaktion darstellt, die unter Anhydridspaltung zu vernetzten Produkten führt. Die daraus resultierenden extrem kurzen Standzeiten verhindern bisher die gemeinsame Verwendung von Polyanhydriden und Polyaminen in Beschichtungssystemen.

Eine Lösungsmöglichkeit wird in der DE-OS 2 853 477 aufgezeigt. Dort werden Mischungen aus blockierten Polyaminen und aus Polyanhydriden beschrieben, die gute Standzeiten aufweisen, jedoch bei Zugabe von Wasser zu vernetzten Produkten aushärten. Als geeignete blockierte Polyamine werden Ketimine bzw. Aldimine beschrieben, die durch Umsetzung von Polyaminen mit Ketonen bzw. Aldehyden erhalten werden.

Als Polyanhydride werden Verbindungen mit wenigstens zwei cyclischen Carbonsäureanhydridgruppen im Molekül, insbesondere Umsetzungsprodukte von Polyolen mit cyclischen Dianhydriden bei einem Hydroxyl-Anhydridgruppenverhältnis von 1:2, oder Copolymerisate eines ungesättigten cyclischen Anhydrids mit mehrfach ungesättigten Verbindungen oder $\alpha$-Olefinen genannt.

Die bei der Herstellung der Copolymerisate einzusetzenden olefinisch ungesättigten Verbindungen werden in der allgemeinen Beschreibung der DE-OS 2 853 477 nur sehr pauschal abgehandelt, insbesondere fehlt jeglicher Hinweis bezüglich der Mengenverhältnisse der einzelnen Monomeren, die bei der Herstellung der Copolymerisate zum Einsatz gelangen sollen. Die konkrete Offenbarung der Ausführungsbeispiele beschränkt sich auf Copolymerisate aus Butadienöl und Xaleinsäureanhydrid im Verhältnis 1:1 und auf Copolymerisate von Holzöl mit Maleinsäureanhydrid. Diese Copolymerisate sind jedoch mit Nachteilen behaftet, da ihre Kombination mit Bisketiminen bzw. Bisaldiminen letztendlich zu stark verfärbten Produkten führt, Im übrigen führen Beschichtungsmittel, die als Bindemittelkomponente ungesättigte Öle wie Butadienöl oder Holzöl enthalten, zu Überzügen, die leicht zur Versprödung neigen und nicht wetterbeständig sind.

Außerdem muß, wie den Ausführungsbeispielen der DE-OS 2 853 477 zu entnehmen, bei der Verarbeitung der dort konkret beschriebenen Bindemittel Dimethylformamid als Lösungsmittel eingesetzt werden, wobei außerdem nicht akzeptable Feststoffgehalte von lediglich ca. 20 % zur Anwendung gelangen.

Wesentlich bessere Systeme in lacktechnischer Hinsicht werden in EP-A-O 284 953 beschrieben, die sich ebenfalls mit Kombinationen aus Polyanhydriden mit Ketiminen bzw. Aldiminen befaßt, wobei als Polyanhydride Copolymerisate von Maleinsäureanhydrid mit anderen olefinisch ungesättigten Monomeren eingesetzt werden. Der Nachteil der in dieser Vorveröffentlichung beschriebenen Bindemittelkombinationen ist vor allem in ihrer für die Praxis oftmals immer noch zu kurzen Standzeit, insbesondere im offenen Gefäß, zu sehen.

Eine weitere Möglichkeit, die Standzeiten zu verlangern, besteht in der Verwendung von Oxazolanen anstelle der Amine.

Wasserhärtbare Zusammensetzungen aus Oxazolanen und Polyanhydriden sind im Prinzip aus der DE-OS 2 610 406 bekannt. Dort werden Oxazolane mit Polyanhydriden für wasserhärtbare Dicht- und Klebstoffmassen kombiniert.

Als geeignete Polyanhydride werden Umsetzungsprodukte von mehrfach ungesättigten Fettsäuren mit Maleinsäureanhydrid und Polyanhydride aus $C_3$-$C_6$-Alkyl-(meth)acrylat und Maleinsäureanhydrid, insbesondere aus Butylacrylat und Maleinsäureanhydrid, beschrieben.

Die in der DE-OS 2 610 406 konkret beschriebenen Systeme sind bezüglich ihrer Eignung zur Herstellung hochwertiger, farbloser Lackfilme hoher Härte und guter Lösungsmittel- und Chemikalienbeständigkeit noch stark verbesserungsbedürftig. Dies gilt sowohl für die in den Ausführungsbeispielen beschriebenen Systeme auf Basis von Copolymerisaten aus Maleinsäureanhydrid und Butylacrylat als auch für die Systeme auf Basis von Umsetzungsprodukten von Maleinsäureanhydrid mit mehrfach ungesättigten Fettsäureestern, die zu vergilbenden Endprodukten führen.

Die Verwendung von carbonatfunktionellen Verbindungen in Kombination mit Polyaminen für Lacke und Beschichtungssysteme ist z.B. aus der EP-A-1088 bekannt.

Die Reaktivität solcher Bindemittelkombinationen ist jedoch verbesserungsbedürftig. Insbesondere bei der Aushärtung bei Raumtemperatur ist auch bei Zugabe von Katalysatoren die Vernetzung noch nicht ausreichend oder erfordert zumindest sehr lange Reaktionszeiten.

In der EP-A-286 933 werden spezielle Härtungskomponenten (A) für Verbindungen (B), die Epoxid- oder cyclische Carbonatgruppen enthalten, beschrieben, welche sich dadurch auszeichnen, daß die Härtungskomponente (A) ein Umsetzungsprodukte aus ($a_1$) CH-aktiven Alkylestern oder aus Addukten von CH-aktiven Alkylestern an Isocyanate mit ($a_2$) Polyaminen darstellt. Verbindungen, welche gleichzeitig Anhydrid- und Carbonatgruppen enthalten, werden ebensowenig erwähnt wie blockierte Aminogruppen aufweisende Vernetzer.

Es war die der Erfindung zugrundeliegende Aufgabe, neue Bindemittelkombinationen zur Verfügung zu stellen, die zur Herstellung von hochwertigen, gegebenenfalls unter dem Einfluß von Luftfeuchtigkeit aushärtenden Systemen mit ausreichender Standzeit geeignet sind. Die erhaltenen Überzüge sollen klar, farblos, vergilbungsbeständig und lösungsmittelfest sein.

Diese Aufgabe konnte durch die Bereitstellung der nachstehend näher beschriebenen Bindemittelkombinationen gelöst werden.

In den erfindungsgemäßen Bindemittelkombinationen liegen als Komponente A) bislang noch nicht bekannt gewordene Copolymerisate vor, die gleichzeitig Anhydrid- und Carbonatgruppen in chemisch eingebauter Form enthalten. Die Härtekomponente B) besteht ihrerseits aus, unter dem Einfluß von Feuchtigkeit aktivierbare, blockierte Aminogruppen aufweisenden, Verbindungen.

Gegenstand der Erfindung sind unter dem Einfluß von Feuchtigkeit aushärtbare Bindemittelkombinationen enthaltend

A) 30 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1.500 bis 75.000, welches gegenüber Aminogruppen im Sinne einer Additionsreaktion reaktionsfähige Gruppen chemisch eingebaut enthält,

und

B) 1 bis 70 Gew.-Teile einer Polyamin-Komponente, bestehend aus mindestens einem organischen Polyamin mit blockierten Aminogruppen, ausgewählt aus der Gruppe bestehend aus Aldimin-, Ketimin-, Oxazolan-, Hexahydropyrimidin- und Tetrahydroimidazolgruppen aufweisenden Verbindungen,

dadurch gekennzeichnet, daß die Copolymerisate der Komponente A) sowohl intramolekulare, durch Copolymerisation von Itaconsäure- oder Maleinsäureanhydrid eingebaute Carbonsäureanhydridgruppen als auch Carbonatgruppen der Formeln

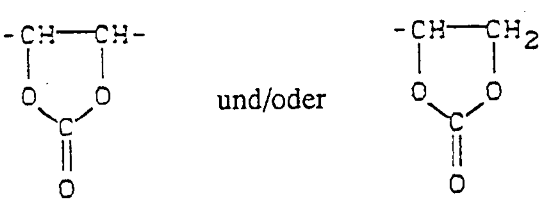

in chemisch gebundener Form enthalten, wobei das Anhydridäquivalentgewicht der Copolymerisate bei 327 bis 9.800 und das Carbonatäquivalentgewicht der Copolymerisate bei 465 bis 18.600 liegt, und wobei in den Bindemittelkombinationen auf jede blockierte Aminogruppe insgesamt 0,2 bis 8 Anhydrid- und Carbonatgruppen entfallen.

Gegenstand der Erfindung ist auch ein Verfahren zur Herstellung dieser Bindemittelkombinationen, welches dadurch gekennzeichnet ist, daß man die Komponenten A) und B) und gegebenenfalls die nachstehend näher genannten weiteren Komponenten C) und/oder D) miteinander vermischt.

Gegenstand der Erfindung ist auch die Verwendung der neuen Bindemittelkombinationen als oder in unter dem Einfluß von Feuchtigkeit aushärtbaren Beschichtungsmitteln und Dichtmassen.

Die Copolymerisatkomponente A) besteht aus mindestens einem Copolymerisat, welches sowohl Carbonatgruppen als auch intramolekulare Säureanhydridgruppen in copolymerisierter Form aufweist, wobei das als Gewichtsmittel bestimmte, nach der Methode der Gelpermeationschromatographie ermittelte Molekulargewicht dieser Copolymerisate bei 1.500 bis 75.000, vorzugsweise 3.000 bis 50.000 und besonders bevorzugt bei 3.000 bis 25.000, liegt. Das Carbonatäquivalentgewicht (= Menge in "g", die 1 Mol Carbonatgruppen enthält) liegt bei 465 bis 18.600, vorzugsweise 1275 bis 9560 und das Anhydridäquivalentgewicht (= Menge in "g", die 1 Mol Anhydridgruppen enthält) liegt bei 327 bis 9.800, vorzugsweise 817 bis 3.270.

Die in der Komponente A) vorliegenden Copolymerisate werden vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den

Copolymerisaten inert sind.

Zur Herstellung der Copolymerisate wird vorzugsweise ein Monomerengemisch verwendet, welches aus

a) 1 bis 30 Gew.-Teilen copolymerisierbaren, Anhydridgruppen enthaltenden Monomeren,

b) 1 bis 40 Gew.-Teilen copolymerisierbaren, Carbonatgruppen enthaltenden Monomeren und

c) 30 bis 98 Gew.-Teilen sonstigen copolymerisierbaren Monomeren der allgemeinen Formeln

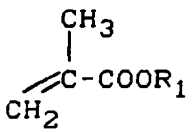 , 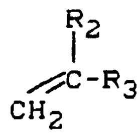 , 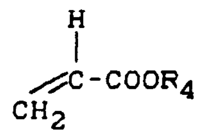 ,

I II III

besteht, wobei

$R_1$ für einen linearen oder verzweigten aliphatischen Kohlenwasserstoffrest mit 1 bis 18 Kohlenstoffatomen oder einen cycloaliphatischen Kohlenwasserstoffrest mit 5 bis 10 Kohlenstoffatomen steht,

$R_2$ für Wasserstoff, eine Methyl-, Ethyl-, Chlor- oder Fluorgruppe steht,

$R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff gegebenenfalls Etherbrücken aufweisende, Alkylsubstituenten mit 1 bis 6 Kohlenstoffatomen trägt, steht, und

$R_4$ bezüglich seiner Bedeutung der für $R_1$ gemachten Definition entspricht, mit $R_1$ jedoch nicht identisch zu sein braucht.

Typische Beispiele für Monomere a) sind z.B. Itaconsäureanhydrid, Maleinsäureanhydrid, wobei Maleinsäureanhydrid bevorzugt ist.

Als Monomere b) sind beliebige organische Verbindungen geeignet, die mindestens eine und vorzugsweise nur eine olefinische, zur Copolymerisation befähigte Doppelbindung und mindestens eine, vorzugsweise nur eine Carbonatgruppe aufweisen. Unter "Carbonatgruppen" sind im Rahmen der Erfindung cyclische Carbonatgruppen der Formel

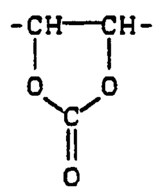

IV

zu verstehen, die vorzugsweise in den Monomeren b) endständig angeordnet sind, d.h. der Formel

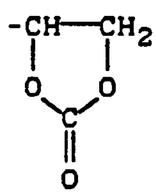

V

entsprechen. Gut geeignet als Monomere b) sind beispielsweise Verbindungen der allgemeinen Formel

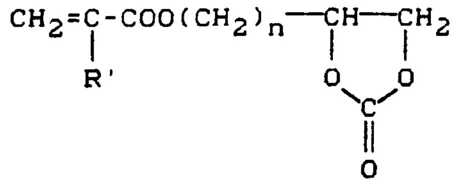

VI

für welche

R' für Wasserstoff oder eine Methylgruppe, vorzugsweise eine Methylgruppe und

n für eine ganze Zahl von 1 bis 6, vorzugsweise für 1 stehen.

Diese Verbindungen sind an sich bekannt und können nach bekannten Verfahren, wie sie beispielsweise in US-PS 2 967 173, US-PS 2 856 413, DE-PS 845 937 oder DE-OS 3 529 263 beschrieben sind, hergestellt werden Besonders bevorzugtes Monomer b) ist (2-Oxo-1,3-dioxolan-4-yl)-methylmethacrylat, das nach den Verfahren der US-PS 2 967 173, EP-A-1088 oder der DE-OS 3 529 263 zugänglich ist.

Unter den Monomeren c) sind insbesondere solche der genannten allgemeinen Formeln bevorzugt, für welche

$R_1$ für einen linearen oder verzweigten aliphatischen Kohlenwasserstoffrest mit 1 bis 8 Kohlenstoffatomen oder einen Cyclohexylrest steht,

$R_2$ für Wasserstoff oder eine Methylgruppe steht,

$R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff einen, gegebenenfalls Etherbrücken aufweisenden, Alkylsubstituenten mit 1 bis 6 Kohlenstoffatomen trägt, steht, und

$R_4$ bezüglich seiner Bedeutung der zuletzt für $R_1$ gemachten Definition entspricht.

Typische Beispiele für geeignete bzw. bevorzugte Reste $R_1$ bzw. $R_4$ sind Methyl-, Ethyl-, n-Propyl, Isopropyl-, n-Butyl-, Isobutyl-, n-Pentyl-, n-Hexyl-, 2-Ethylhexyl-, n-Octyl-, n-Decyl-, n-Dodecyl- oder Cyclohexylreste.

Typische Beispiele für geeignete bzw. bevorzugte Reste $R_2$ sind Wasserstoff-, Methyl-, Ethyl-, Chlor- oder Fluorreste.

Typische Beispiele für geeignete bzw. bevorzugte Reste $R_3$ sind aliphatische Reste der soeben für $R_1$ beispielhaft genannten Art mit Ausnahme von Wasserstoff und Methyl und außerdem Phenyl-, 2-, 3- und 4-Methylphenyl-, Propoxy-, n-Butoxy-, Acetyl-, Propionyl-, n-Butyryl- oder N-Methoxymethyl-aminocarbonyl-Reste.

Besonders bevorzugte Copolymerisat-Komponenten A) sind solche, den obengemachten Angaben entsprechende Copolymerisate, in denen

a) 1 bis 30 Gew.-Teile, insbesondere 3 bis 20 Gew.-Teile Maleinsäureanhydrid,

b) 1 bis 40 Gew.-Teile, insbesondere 2 bis 30 Gew.-Teile (2-Oxo-1,3-dioxolan-4-yl)-methylmethacrylat,

c) 30 bis 98 Gew.-Teile, insbesondere 50 bis 95 Gew.-Teile an Monomeren der Formeln

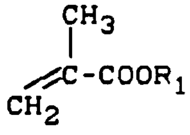

,

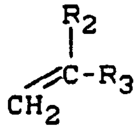

,

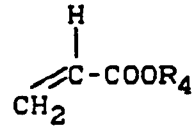

in copolymerisierter Form vorliegen.

Besonders bevorzugt werden als Komponente A) solche der gemachten Definition entsprechende Copolymerisate eingesetzt, in denen pro 100 Gew.-Teile Maleinsäureanhydrid 40 bis 140 Gew.-Teile an anderen Monomeren, ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, neben (2-Oxo-1,3-dioxolan-4-yl)-methylmethacrylat und gegebenenfalls neben anderen Comonomeren vorliegen.

Für die Durchführung der Copolymerisation geeignete Lösungsmittel sind beispielsweise Ester wie Ethylacetat, Propylacetat, Butylacetat, Isopropylacetat, Isobutylacetat, sec.-Butylacetat, Amylacetat, Hexylacetat, Heptylacetat, Benzylacetat, Ethylpropionat, Butylpropionat, Methylglykolacetat, Ethylglykolacetat, Butylglykolacetat, Ethyldiglykolacetat, Ethylglykolacetat, Methyldiglykolacetat, Butyldiglykolacetat, Butyrolacton, Propylenglykolmethyletheracetat, z.B. Ether wie Diisopropylether, Dibutylether, Tetrahydrofuran, Dioxan, Dimethyldiglykol, Kohlenwasserstoffe wie Solventnaphtha, Terpene, Cyclohexan, Toluol, Xylol, Ethylbenzol, Ketone wie Aceton, Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger und anderer Lösungsmittel.

Die Copolymerisation wird üblicherweise bei Feststoffgehalten von 30 bis 95 Gew.-% durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 %, bevorzugt mehr als 99 %, beendet. Gegebenenfalls ist es erforderlich, durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, das nach der Polymerisation größere Mengen an Maleinsäureanhydridrestmonomeren im Copolymerisat enthalten sind. Für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator, gegebenenfalls unter gleichzeitiger Zugabe von geringen Mengen einer gut mit Maleinsäureanhydrid copolymerisierbaren Monomerenmischung, wie z.B. Styrol, Butylacrylat, zu reduzieren.

Es ist auch möglich, einen Teil des Maleinsäureanhydrids mit dem Lösungsmittel vorzulegen, oder das Maleinsäureanhydrid schneller als die anderen Monomeren zuzutropfen. Diese geänderten Herstellverfahren können in gewissen Fällen die Verträglichkeit der Komponenten der Bindemittelkombination verbessern.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt, die für Reaktionstemperaturen von 60 bis 180°C geeignet sind, wie organische Peroxide, z.B.: Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid, wie Azoverbindungen, z.B. 2,2'-Azobis-(2,4-dimethylvaleronitril), 2,2'-Azobis-(isobutyronitril), 2,2'-Azobis-(2,3-dimethylbutyronitril), 1,1'-Azobis-(1-cyclohexannitril).

Die Initiatoren können in Mengen von 0,5 bis 12 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan usw. in Mengen von 0 bis 3 Gew.-% eingesetzt werden.

Die Härterkomponente B) besteht aus mindestens einer Verbindung mit, unter dem Einfluß von Feuchtigkeit aktivierbaren, blockierten Aminogruppen, ausgewählt aus der Gruppe bestehend aus Aldimin-, Ketimin-, Oxazolan-, Hexahydropyrimidin- und Tetrahydroimidazolgruppen, wobei die betreffenden Verbindungen gleichzeitig auch mehrere dieser Gruppen enthalten können.

Die blockierten Polyamine der Komponente B) weisen ein als Gewichtsmittel bestimmtes, aus der Stöchiometrie der Ausgangsmaterialien zur Herstellung der Verbindungen errechenbares (Molekulargewichte bis ca. 1.000) bzw. nach der Methode der Gelpermeationschromatographie ermitteltes (Molekulargewichte von über ca. 1.000) Molekulargewicht von 86 bis 10.000, bevorzugt von 250 bis 4.000, auf und enthalten im statistischen Mittel 1 bis 50, bevorzugt 2 bis 10, und insbesondere 2 bis 4, Struktureinheiten der allgemeinen Formeln

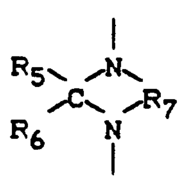 ,

VII

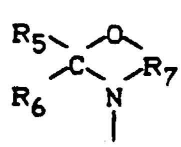 und/oder

VIII

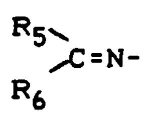

IX

wobei

$R_5$ und $R_5$ für gleiche oder verschiedene Reste stehen und Wasserstoff, aliphatische Kohlenwasserstoffreste mit 1 bis 18 Kohlenstoffatomen, cycloaliphatische Kohlenwasserstoffreste mit 5 bis 10 Kohlenstoffatomen, araliphatische Kohlenwasserstoffreste mit 7 bis 18 Kohlenstoffatomen oder

Phenylreste bedeuten, wobei die beiden Reste $R_5$ und $R_6$ zusammen mit dem benachbarten Kohlenstoffatom auch einen 5- oder 6-gliedrigen cycloaliphatischen Ring bilden können, und wobei vorzugsweise höchstens einer der Reste für Wasserstoff steht, und

$R_7$ für einen zweiwertigen aliphatischen Kohlenwasserstoffrest mit 2 bis 6 Kohlenstoffatomen steht, mit der Maßgabe, daß zwischen den beiden Stickstoffatomen 2 oder 3 Kohlenstoffe angeordnet sind.

Bevorzugt eingesetzte Komponenten B sind z.B. solche, die Hexahydropyrimidin- bzw. Tetrahydroimidazolstrukturen der allgemeinen Formel VII enthalten, für welche $R_5$ und $R_6$ für gleiche oder verschiedene aliphatische Kohlenwasserstoffreste mit 2 bis 10 Kohlenstoffatomen stehen, wobei einer der Reste auch für Wasserstoff stehen kann und $R_7$ für einen Ethylen- oder Trimethylenrest steht.

Die Herstellung von blockierten Polyaminen der genannten Art gelingt in an sich bekannter Weise durch Umsetzung von entsprechenden Aldehyden bzw. Ketonen mit den entsprechenden Polyaminen.

Zur Herstellung der Hexahydropyrimidin- bzw. Tetrahydroimidazolgruppen aufweisenden Verbindungen B) geeignete Aldehyde bzw. Ketone sind beispielsweise solche der allgemeinen Formel

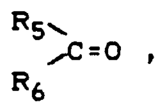

X

die vorzugsweise ein Molekulargewicht von 72 bis 200 (Ketone) bzw. von 58 bis 250 (Aldehyde) aufweisen.

Beispiele hierfür sind Aceton, Methylethylketon, Methylpropylketon, Methylisopropylketon, Methyl-n-butylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Isophoron, Methyl-tert.-butylketon, 5-Methyl-3-heptanon, 4-Heptylketon, 1-Phenyl-2-propanon, Acetophenon, Methylnonylketon, 3,3,5-Trimethylcyclohexanon, Formaldehyd, Acetaldehyd, Propionaldehyd, Butyraldehyd, Isobutyraldehyd, Trimethylacetaldehyd, 2,2-Dimethylpropanal, 2-Ethylhexanal, 3-Cyclohexen-1-carboxaldehyd, Hexanal, Heptanal, Octanal, Valeraldehyd, Benzaldehyd, Tetrahydrobenzaldehyd, Hexahydrobenzaldehyd, Acrolein, Crotonaldehyd, Propargylaldehyd, p-Toluylaldehyd, 2-Methylpentanal, 3-Methylpentanal, Phenylethanal, 4-Methylpentanal.

Zur Herstellung der Hexahydropyrimidin- bzw. Tetrahydroimidazolgruppen aufweisenden Verbindungen bevorzugte Aldehyde und Ketone sind Butyraldehyd, Isobutyraldehyd, Trimethylacetaldehyd, 2,2-Dimethylpropanal, 2-Ethylhexanal, Hexanal, 3-Cyclohexan-1-carboxaldehyd, Heptanal, Octanal, Hexahydrobenzaldehyd, 2-Methylpentanal, Cyclohexanon, Cyclopentanon, Methylisopropylketon, Aceton, 3,3,5-Trimethylcyclohexanon und Methylcyclohexanon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Hexahydropyrimidin- bzw. Tetrahydroimidazolgruppen aufweisenden Verbindungen zum Einsatz gelangenden Polyaminen handelt es sich insbesondere um organische Verbindungen, die mindestens zwei primäre und/oder sekundäre Aminogruppen aufweisen.

Geeignete Polyamine sind beispielsweise solche der allgemeinen Formel

$$R_6 - NH - R_7 - NH - R_9, \qquad XI$$

in welcher

$R_7$ die obengenannte Bedeutung hat und

$R_6$ und $R_9$ für gleiche oder verschiedene Reste stehen und Wasserstoff, aliphatische Kohlenwasserstoffreste mit 1 bis 10, bevorzugt 1 bis 4 Kohlenstoffatomen, cycloaliphatische Kohlenwasserstoffreste mit 5 bis 10, vorzugsweise 6 Kohlenstoffatomen oder aromatische Kohlenwasserstoffreste mit 7 bis 15, vorzugsweise 7 Kohlenwasserstoffatomen, stehen, wobei die genannten Kohlenwasserstoffreste, insbesondere die genannten aliphatischen Kohlenwasserstoffreste, gegebenenfalls Heteroatome wie Sauerstoff, Stickstoff oder Schwefel in Form von Ether-, Ester-, Amid-, Urethan-, Oxiran-, Keton-, Lactam-, Harnstoff-, Thioether-, Thioester- oder Lactongruppen aufweisen können, oder wobei die Reste auch reaktionsfähige Hydroxyl- oder Aminogruppen aufweisen können.

Besonders bevorzugte Polyamine sind solche, bei denen $R_6$ und $R_9$ für gleiche oder verschiedene einfache Alkylreste wie Methyl-, Ethyl-, n-Propyl-, iso-Propyl-, n-Butyl-, iso-Butyl-, tert.-Butyl-, n-Pentyl- oder n-Hexylreste stehen, oder wobei zumindest einer der Reste $R_8$ bzw. $R_9$ für einen Rest steht, wie er durch Anlagerung eines Aminwasserstoffatoms an eine olefinisch ungesättigte Verbindung erhalten wird. Zur Herstellung derartiger, modifizierter Polyamine geeignete, olefinisch ungesättigte Verbindungen sind beispielsweise Derivate der (Methyl)acrylsäure wie Ester, Amide, Nitrile oder z.B. Vinylaromaten wie Styrol, $\alpha$-Methylstyrol, Vinyltoluol oder z.B. Vinylester wie Vinylacetat, Vinylpropionat, Vinylbutyrat oder z.B. Vinylether wie Ethylvinylether, Propylvinylether, Butylvinylether oder Mono- und Diester der Fumarsäure, Maleinsäure oder Tetrahydrophthalsäure. $R_8$ und/oder $R_9$ können auch für einen Aminoalkyl- oder Hydroxyalkylrest mit beispielsweise 2 bis 4 Kohlenstoffatomen stehen.

Ganz besonders bevorzugte Polyamine sind Ethylendiamin, 1,2-Propylendiamin, 1,3-Propylendiamin, 1,2- und 1,3-Butylendiamin, Diethylentriamin sowie Derivate dieser Polyamine.

Als Komponente B) geeignete, Oxazolangruppen der allgemeinen Formel VIII aufweisende Verbindungen sind vorzugsweise solche, für welche $R_5$ und $R_6$ für gleiche oder verschiedene Reste stehen und Wasserstoff oder aliphatische Kohlenwasserstoffreste mit 1 bis 18 und insbesondere 1 bis 8 Kohlenstoffatomen stehen, oder wobei die Reste $R_5$ und $R_6$ zusammen mit dem Kohlenstoffatom des heterocyclischen Rings einen cycloaliphatischen Ring mit insgesamt 4 bis 9 Kohlenstoffatomen, insbesondere einen Cyclohexanring bilden, mit der Maßgabe, daß höchstens einer der Reste $R_6$ oder $R_6$ für Wasserstoff steht, und wobei $R_7$ für einen Alkylenrest mit 2 bis 4, vorzugsweise 2 bis 3 Kohlenstoffatomen steht, mit der Maßgabe, daß zwischen dem Sauerstoff- und dem Stickstoffatom mindestens 2 Kohlenstoffatome angeordnet sind.

Die Herstellung der oxazolanhaltigen Komponente B) gelingt in an sich bekannter Weise durch Umsetzung von entsprechenden Aldehyden bzw. Ketonen der Formel

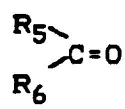

X .

mit geeigneten Hydroxyaminen der nachstehend näher genannten Art.

Als Aldehyde bzw. Ketone kommen grundsätzlich solche der oben bereits beispielhaft genannten Art in Betracht. Bevorzugte Aldehyde bzw. Ketone sind hier Butyraldehyd, Isobutyraldehyd, Trimethylacetaldehyd, 2,2-Dimethylpropanal, 2-Ethylhexanal, 3-Cyclohexen-1-carboxaldehyd, Hexahydrobenzaldehyd, Cyclopentanon, Cyclohexanon, Methylcyclopentanon, Methylcyclohexanon, 3,3,5-Trimethylcyclohexanon, Cyclobutanon, Methylcyclobutanon, Aceton, Methylethylketon und Methylisobutylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei Hydroxyaminen handelt es sich insbesondere um organische Verbindungen, die mindestens eine aliphatische Aminogruppe und mindestens eine aliphatisch gebundene Hydroxylgruppe aufweisen. Die Verwendung von solchen Hydroxyaminen, die aromatisch oder cycloaliphatisch gebundene Amino- oder Hydroxylgruppen aufweisen, ist zwar ebenfalls möglich, jedoch weniger bevorzugt. Die Hydroxyamine weisen im allgemeinen ein zwischen 61 und 500, vorzugsweise zwischen 61 und 300 liegendes Molekulargewicht auf.

Geeignete Hydroxyamine können z.B. sein: Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(2-hydroxyethyl)-amin, 2-(Methylamino)-ethanol, 2-(Ethylamino)-ethanol, 2-(Propylamino)-ethanol, 2-(Butylamino)-ethanol, 2-(Hexylamino)-ethanol, 2-(Cyclohexylamino)-ethanol, 2-Amino-2-methyl-1-propanol, 2-Amino-2-ethyl-1-propanol, 2-Amino-2-propyl-1-propanol, 2-Amino-2-methyl-1,3-propandiol, 2-Amino-3-methyl-3-hydroxybutan, Propanolamin, Ethanolamin.

Ganz besonders bevorzugt sind: Bis-(2-hydroxyethyl)-amin, Bis-(2-hydroxypropyl)-amin, Bis-(2-hydroxybutyl)-amin, Bis-(3-hydroxyhexyl)-amin, 2-(Methylamino)-ethanol, 2-(Ethylamino)-ethanol, 2-Amino-2-methyl-1-propanol, 2-Amino-2-ethyl-1-propanol, Propanolamin und Ethanolamin.

Zu den bevorzugten Aldimin- bzw. Ketimingruppen aufweisenden Verbindungen gehören solche, die Sturktureinheiten der allgemeinen Formel IX

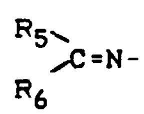

IX

enthalten, wobei

$R_5$ und $R_5$ für gleiche oder verschiedene Reste stehen und Wasserstoff oder aliphatische Kohlenwasserstoffreste mit 1 bis 8 Kohlenstoffatomen stehen, die auch zusammen mit dem Kohlenstoffatom zu einem cycloaliphatischen Ring, insbesondere einem Cyclohexanring verknüpft sein können.

Zur Herstellung dieser Verbindungen sind im Prinzip die bereits oben beispielhaft genannten Aldehyde bzw. Ketone geeignet. Bevorzugte Aldehyde bzw. Ketone sind hier Butyraldehyd, Isobutyraldehyd, Trimethylacetaldehyd, 2,2-Dimethylpropanal, 2-Ethylhexanal, 3-Cyclohexen-1-carboxaldehyd, Hexahydrobenzaldehyd und insbesondere solche Ketone, die einen Siedepunkt von unter 170°C aufweisen und bei Raumtemperatur eine gute Flüchtigkeit zeigen, wie z.B. Methylisobutylketon, Methylisopropylketon, Diethylketon, Diisobutylketon, Methyl-tert.-butylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Ketimin- bzw. Aldimingruppen enthaltenden Komponente B) zum Einsatz gelangenden Polyaminen handelt es sich insbesondere um organische Verbindungen, die mindestens zwei aliphatisch und/oder cycloaliphatisch gebundene primäre Aminogruppen aufweisen. Die Verwendung von solchen Polyaminen, die aromatisch gebundene Aminogruppen aufweisen, ist zwar ebenfalls möglich, jedoch weniger bevorzugt. Die Polyamine weisen im allgemeinen ein von 60 bis 500, vorzugsweise von 88 bis 400 liegendes Molekulargewicht auf, jedoch können auch höhermolekulare, endständige Aminogruppen aufweisende Prepolymere als Polyaminkomponente bei der Herstellung der Komponente B) eingesetzt werden.

Besonders bevorzugte Polyamine sind diprimäre aliphatische bzw. cycloaliphatische Diamine wie beispielsweise Tetramethylendiamin, Hexamethylendiamin, Isophorondiamin, Bis-(4-aminocyclohexyl)-methan, Bis-aminomethylhexahydro-4,7-methanoindan, 1,4-Cyclohexandiamin, 1,3-Cyclohexandiamin, 2-Methylcyclohexandiamin, 4-Methylcyclohexandiamin, 2,2,5-Trimethylhexandiamin, 2,2,4-Trimethylhexandiamin, 1,4-Butandiol-bis-(3-aminopropyl)-ether, 2,5-Diamino-2,5-dimethylhexan, Bis-aminomethylcyclohexan, Bis-(4-amino-3,5-dimethylcyclohexyl)-methan oder deren Gemische.

Ganz besonders bevorzugt sind Tetramethylendiamin, Hexamethylendiamin, Isophorondiamin, Bis-aminomethylcyclohexan, 1,4-Cyclohexandiamin, Bis-aminomethylhexahydro-4,7-methanoindan und Bis-(4-aminocyclohexyl)-methan.

Neben diesen bevorzugten Diaminen können zur Herstellung der Aldimine bzw. Ketimine auch endständige primäre Aminogruppen aufweisende Prepolymere eingesetzt werden, d.h. Verbindungen, die mindestens zwei endständige Aminogruppen und ein Molekulargewicht von 500 bis 5.000, vorzugsweise 500 bis 2.000, aufweisen. Zu diesen Verbindungen gehören beispielsweise die aus der Polyurethanchemie an sich bekannten Aminopolyether, wie sie beispielsweise in der EP-A-0 081 701 beschrieben werden, oder z.B. Amid-, Harnstoff-, Urethan- oder sekundäre Aminogruppen aufweisende Umsetzungsprodukte von mindestens difunktionellen Carbonsäuren, Isocyanaten oder Epoxiden mit Diaminen der oben beispielhaft genannten Art, wobei diese Umsetzungsprodukte noch mindestens zwei primäre Aminogruppen aufweisen. Auch Gemische von derartigen höhermolekularen Polyaminen mit den beispielhaft genannten niedermolekularen Polyaminen können zum Einsatz gelangen.

Zu den aromatischen Polyaminen, die im Prinzip auch zur Herstellung der Aldimine bzw. Ketimine geeignet, jedoch weniger bevorzugt sind, gehören beispielsweise 2,4- und 2,6-Diaminotoluol, 1,4-Diaminobenzol oder 4,4′-Diaminodiphenylmethan.

Die Herstellung der Komponente B), welche Aldimin-, Ketimin-, Oxazolan-, Hexahydropyrimidin- oder Tetrahydroimidazolgruppen enthalten kann, erfolgt durch Umsetzung der Ausgangskomponenten, wobei im allgemeinen die Mengenverhältnisse der Reaktionspartner so gewählt werden, daß die Aminoverbindungen, bezogen auf die jeweilig angestrebte Reaktion, in 1- bis 1,5-fachem molarem Überschuß, bezogen auf die Carbonylgruppen, vorliegen. Gegebenenfalls können zur Reaktionsbeschleunigung katalytische Mengen von sauren Substanzen wie z.B. p-Toluolsulfonsäure, Salzsäure, Schwefelsäure, Aluminium-III-chlorid, Zinnverbindungen eingesetzt werden.

Die Umsetzung erfolgt im allgemeinen innerhalb des Temperaturbereichs von 60 bis 180°C, wobei die Reaktion in Gegenwart eines Schleppmittels zur Entfernung des Reaktionswassers so lange durchgeführt wird, bis die berechnete Menge an Wasser abgespalten ist bzw. bis kein Wasser mehr abgespalten wird. Anschließend werden Schleppmittel und gegebenenfalls vorliegende, nicht umgesetzte Ausgangsmaterialien destillativ abgetrennt. Geeignete Schleppmittel sind z.B. Toluol, Xylol, Cyclohexan, Octan. Die so erhaltenen Rohprodukte können ohne weitere Reinigungsschritte als Komponente B) zur Herstellung der Bindemittelkombination verwendet werden. Werden besonders hohe Anforderungen an die Reinheit der Komponente B) gestellt, so ist es auch möglich, z.B. durch eine Destillation, die Komponenten B) in reiner Form zu erhalten.

Zu den bevorzugten, blockierten Polyaminen der Komponente B) gehören auch solche, in denen 2 bis 10 Struktureinheiten der allgemeinen Formel VII, VIII, IX enthalten sind, und die durch Verknüpfung dieser Strukturelemente unter Ausbildung von z.B. Ester-, Ether-, Amid-, Harnstoff- und/oder Urethanbindungen erhalten

werden.

Zur Verknüpfung untereinander geeignete Struktureinheiten der Formeln VII, VIII, IX müssen mindestens eine primäre bzw. sekundäre Aminogruppe oder eine Hydroxylgruppe in nicht blockierter Form enthalten.

Geeignete Verknüpfungsreagenzien zur Herstellung höhermolekularer Komponenten B) sind z.B. Polyisocyanate, Polyepoxide, Polycarbonsäuren und Polyacryloylverbindungen.

Für diese Modifizierungsreaktion geeignete Polyisocyanate sind beispielsweise aliphatische, cycloaliphatische, araliphatische, aromatische und heterocyclische Polyisocyanate, wie sie z.B. von W. Siefken in Justus Liebigs Annalen der Chemie, 562, S. 75-136, beschrieben werden, beispielsweise 1,4-Tetramethylendiisocyanat, 1,6-Hexamethylendiisocyanat, 1,12-Dodecandiisocyanat, Cyclobutan-1,3-diisocyanat, Cyclohexan-1,3-diisocyanat, Cyclohexan-1,4-diisocyanat, 1-Isocyanato-3,3,5-trimethyl-5-isocyanatomethyl-cyclohexan 2,4- und 2,6-Hexahydrotoluylendiisocyanat, Hexahydro-1,3- und -1,4-phenylen-diisocyanat, Perhydro-2,4′, und/oder -4,4′-diphenylmethandiisocyanat, 1,3-Phenylendiisocyanat, 1,4-Phenylendiisocyanat, 2,4-Toluylendiisocyanat, 2,6-Toluylendiisocyanat, Diphenylmethan-2,4′ und/oder -4,4′-diisocyanat, Naphthylen-1,5-diisocyanat, Gemische dieser und anderer Polyisocyanate, Polyisocyanate mit Carbodiimidgruppen (z.B. DE-OS 10 92 007), Polyisocyanate mit Allophanatgruppen (z.B. GB-PS 944 890), Isocyanuratgruppen aufweisende Polyisocyanate (z.B. DE-PS 10 22 789, DE-PS 12 22 067), Urethangruppen aufweisende Polyisocyanate (z.B. US-PS 33 94 164) oder durch Umsetzung von mindestens difunktionellen Hydroxyverbindungen mit überschüssigen, mindestens difunktionellen Isocyanaten hergestellte Polyisocyanate, Biuretgruppen aufweisende Polyisocyanate (z.B. DE-PS 11 01 394) und präpolymere bzw. polymere Substanzen mit mindestens zwei Isocyanatgruppen.

Vertreter dieser erfindungsgemäßen zu verwendenden Verbindungen sind z.B. in High Polymers, Vol. XVI, "Polyurethans, Chemistry and Technology" Interscience Publishers, New York, London, Band I, 1962, S. 32-42 bzw. 45-54 und Band II, 1964, S. 5-6 und 198-199, sowie im Kunststoffhandbuch, Band VII, Vieweg-Höchtlen, Carl-Hanser-Verlag, München, 1966, S. 45-72, beschrieben.

Für die genannte Modifizierungsreaktion genannte Polyepoxide sind beispielsweise aliphatische, cycloaliphatische, araliphatische, aromatische und heterocyclische, mindestens zwei Epoxidgruppen enthaltende Substanzen, wie z.B. epoxidierte Ester aliphatischer polybasischer Säuren mit ungesättigten einwertigen Alkoholen, Glycidylether von Polyhydroxyverbindungen, Glycidylester von Polycarbonsäuren, epoxidgruppenhaltige Copolymerisate.

Für die Modifizierungsreaktion geeignete Polycarbonsäuren sind beispielsweise aliphatische, cycloaliphatische, araliphatische, aromatische und heterocyclische, mindestens zwei Carboxylgruppen enthaltende Substanzen, wie z.B. Adipinsäure, Dimerfettsäure, Phthalsäure, Terephthalsäure, Isophthalsäure, Fumarsäure, Maleinsäure, Bernsteinsäure, Trimellithsäure, Pyromellithsäure, (Meth)acrylsäure-haltige Copolymerisate, saure Polyester oder saure Polyamide.

Anstelle der beispielhaft genannten Säuren können auch die entsprechenden Säureanhydride (sofern es sich um intramolekulare Anhydride bildende Säuren handelt) oder die entsprechenden einfachen Alkylester, insbesondere Methylester für die Modifizierungsreaktion eingesetzt werden.

Für die Modifizierungsreaktion geeignete Verbindungen mit mindestens zwei olefinischen Doppelbindungen der genannten Art sind insbesondere Derivate der Acrylsäure bzw. Methacrylsäure wie beispielsweise Hexandiol-bis-(meth)acrylsäureester, Trimethylolpropan-tris-(meth)acrylsäureester, Pentaerythrittetra(meth) acrylsäureester, OH-funktionelle Polyester bzw. Polyacrylate, die mit Acrylsäure verestert sind, Diethylenglykoldimethacrylsäureester, Umsetzungsprodukte von Polyisocyanaten mit Hydroxyalkyl(meth)acrylat.

Bei der Modifizierungsreaktion zur Herstellung von höherfunktionellen Komponenten B) ist es auch möglich, Gemische verschiedener blockierter Amine einzusetzen, die jeweils mindestens eine freie, mit dem Modifizierungsmittel reaktionsfähige Hydroxyl- oder Aminogruppe aufweisen.

Ketimin- bzw. Aldimingruppen-haltige Polyamine, die noch mindestens eine freie primäre bzw. sekundäre Aminogruppe oder eine freie Hydroxylgruppe enthalten, erhält man z.B. durch Umsetzung von mindestens difunktionellen Aminen mit Ketonen und/oder Aldehyden in solchen Äquivalentverhältnissen, daß mindestens eine Aminogruppe frei bleibt.

Auch bei der Verwendung von beispielsweise solchen Polyaminen, die neben primären Aminogruppen mindestens eine sekundäre Aminogruppe aufweisen, entstehen bei der Umsetzung mit Aldehyden oder Ketonen Aldimine bzw. Ketimine, die mindestens eine freie sekundäre Aminogruppe aufweisen (falls unter Einhaltung eines Äquivalentverhältnisses von primären Aminogruppen, zu Carbonylgruppen von 1:1 gearbeitet worden ist), bzw. die neben mindestens einer sekundären Aminogruppe noch freie primäre Aminogruppen enthalten (falls die Carbonylverbindungen, bezogen auf die primären Aminogruppen, im Unterschuß verwendet worden sind). Derartige primär-sekundäre Polyamine sind beispielsweise Diethylentriamin, Triethylentetramin, Tetraethylenpentamin, Dipropylentriamin, Tripropylentetramin.

Oxazolangruppen enthaltende Verbindungen, die noch mindestens eine reaktive primäre bzw. sekundäre Aminogruppe oder eine Hydroxygruppe aufweisen, erhält man z.B. durch Umsetzung von Hydroxyaminen, die

neben einer Hydroxygruppe und einer sekundären Aminogruppe noch mindestens eine weitere Hydroxygruppe und/oder primäre bzw. sekundäre Aminogruppe aufweisen, oder durch Umsetzung von geeigneten Hydroxyaminen mit einer Hydroxygruppe und einer primären Aminogruppe in geeigneten Äquivalentverhältnissen mit Ketonen und/oder Aldehyden, wie sie z.B. weiter oben beschrieben worden sind. Geeignete Hydroxyamine können z.B. sein: Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(6-hydroxyhexyl)-amin, 2-Amino-2-methyl-1-propanol, 2-Amino-2-methyl-1,3-propandiol, 2-Amino-3-methyl-3-hydroxybutan, Aminoethanol.

Die Herstellung der Oxazolangruppen enthaltenden Hydroxyamine, die noch mindestens eine freie primäre bzw. sekundäre Aminogruppe bzw. eine Hydroxygruppe aufweisen, erfolgt durch Umsetzung der genannten Ausgangskomponenten unter Einhaltung eines solchen Äquivalentverhältnisses von Amino- bzw. Hydroxygruppen zu Aldehyd- bzw. Ketongruppen, daß mindestens eine primäre bzw. sekundäre Aminogruppe bzw. eine Hydroxygruppe nicht blockiert wird und für die anschließende Umsetzung mit dem als Modifizierungsmittel verwendeten Reaktionspartner zur Verfügung steht.

Hexahydropyrimidin- bzw. Tetrahydroimidazolgruppen enthaltende Verbindungen, die noch mindestens eine reaktive primäre bzw. sekundäre Aminogruppe oder eine Hydroxygruppe aufweisen, erhält man z.B. durch Umsetzung von Hydroxyaminen, die neben mindestens einer Hydroxygruppe noch zwei sekundäre Aminogruppen enthalten, wie z.B. N-Methyl-N′-hydroxybutyl-tetramethylendiamin, oder durch Umsetzung von Polyaminen, die neben mindestens einer sekundären Aminogruppe mindestens eine primäre Aminogruppe oder mindestens zwei weitere sekundäre Aminogruppen enthalten, wie z.B. N-Methyl-1,3-diaminoethan, N-Methyl-1,3-diaminopropan, N-Methyl-1,3-diaminobutan, Diethylentriamin, N-Methyldiethylentriamin, 3,3′-Diaminodipropylamin, N,N′-Dimethylethylentriamin.

Die Herstellung der Hexahydropyrimidin- bzw. Tetrahydroimidazolgruppen enthaltenden Verbindungen, welche noch mindestens eine frei primäre bzw. sekundäre Aminogruppe bzw. eine Hydroxylgruppe aufweisen, erfolgt durch Umsetzung der genannten Ausgangsverbindungen unter Einhaltung eines solchen Äquivalentverhältnisses von Amino- bzw. Hydroxygruppen zu Aldehyd- bzw. Ketogruppen, daß mindestens eine primäre bzw. sekundäre Aminogruppe bzw. eine Hydroxylgruppe nicht blockiert wird und für die anschließende Umsetzung mit dem als Modifizierungsmittel verwendeten Reaktionspartner zur Verfügung steht.

Falls die beispielhaft genannten Modifizierungsmittel mit freien primären bzw. sekundären Amino- bzw. Hydroxylgruppen aufweisenden Hexahydropyrimidinen bzw. Tetrahydroimidazolen umgesetzt werden, entstehen höherfunktionelle Hexahydropyrimidine bzw. Tetrahydroimidazole. Entsprechendes gilt für die Modifizierung von Aldiminen bzw. Ketiminen und für die Modifizierung von Oxazolanen.

Falls die Modifizierungsmittel jedoch mit Gemischen aus Hexahydropyrimidinen, Tetrahydroimidazolen, Aldiminen, Ketiminen und/oder Oxazolanen, welche freie primäre bzw. sekundäre Amino- bzw. Hydroxylgruppen aufweisen, umgesetzt werden, entstehen Vernetzungskomponenten B), in denen Hexahydropyrimidine, Tetrahydroimidazole, Ketimine, Aldimine und/oder Oxazolane chemisch miteinander verknüpft sind.

Durch diese Modifizierungs- bzw. Verknüpfungsreaktionen sind somit die unterschiedlichsten, als Komponente B) geeigneten Verbindungen zugänglich.

Die Modifizierungsreaktion wird üblicherweise in einem Lösungsmittel der oben beispielhaft genannten Art bei Reaktionstemperaturen von 30 bis 180°C, gegebenenfalls am Wasserabscheider, durchgeführt.

Dabei wird in der Regel ein äquivalentes Verhältnis von reaktionsfähigen Gruppen der blockierten Polyamine zu den reaktionsfähigen Gruppen des "Modifizierungsmittels" gewählt. Es ist jedoch auch möglich, die "Modifizierungsmittel" im Unterschuß, etwa unter Verwendung von 0,75 bis 0,99-fach äquivalenten Mengen, einzusetzen.

Die erfindungsgemäßen Bindemittelkombinationen können als weiteren Bestandteil auch C) Katalysatoren enthalten. Geeignete Katalysatoren sind insbesondere tert.-Amine des Molekulargewichtsbereichs 89 bis 1.000 wie z.B. 1,4-Diazabicyclo-[2.2.2]-octan, Triethylendiamin, Triethylamin, Triethanolamin, Dimethylethanolamin, Methyldiethanolamin, Diethanolamin, Diethylethanolamin, Dibutylethanolamin, Diethylhexanolamin, N,N,N′,N′-Tetramethylethylendiamin, N,N-Dimethyl-1,3-propandiamin, 1,8-Diazabicyclo-(5,4,0)-undec-7-en.

Schließend können die erfindungsgemäßen Bindemittelkombinationen auch noch weitere Hilfs- und Zusatzmittel D) wie beispielsweise Lösungs- bzw. Verdünnungsmittel, Verlaufshilfsmittel, Antioxidantien oder UV-Absorber enthalten.

Die Durchführung des erfindungsgemäßen Verfahrens erfolgt dergestalt, daß man die Ausgangskomponenten A) und B), sowie gegebenenfalls die Komponenten C) und D) miteinander vermischt. Im Falle der Mitverwendung von Lösungs- bzw. Verdünnungsmitteln als Komponente D) können diese bereits einer oder mehrerer der Einzelkomponenten oder aber erst dem Gemisch aus den Komponenten A) bis C) zugemischt werden. Insbesondere ist eine Ausführungsform denkbar, derzufolge die Lösungs- bzw. Verdünnungsmittel auch schon während der Herstellung einer oder mehrerer Ausgangskomponenten zugegen sind, wie dies z.B. vorstehend bei der Herstellung der Copolymerisate beschrieben worden ist. Die Lösungs- bzw. Verdünnungsmittel sollten

weitgehend wasserfrei sein, um eine ausreichende Verarbeitungszeit der Gemische sicherzustellen. Lösungs- bzw. Verdünnungsmittel werden im allgemeinen in solchen Mengen mitverwendet, die zur Einstellung von geeigneten Verarbeitungsviskositäten der erfindungsgemäßen Kombinationen erforderlich sind. Der Festgehalt der der erfindungsgemäßen Verwendung zuzuführenden erfindungsgemäßen Kompositionen liegt im allgemeinen zwischen 20 und 90 Gew.-%. Durch Verwendung geeigneter niedermolekularer Copolymerisate ist es jedoch auch prinzipiell möglich, den Lösungs- bzw. Verdünnungsmittelgehalt noch weiter zu reduzieren, bzw. auf die Mitverwendung dieser Hilfsmittel völlig zu verzichten.

Gemäß einer bevorzugten Ausführungsform des erfindungsgemäßen Verfahrens werden als alleinige blockierte Polyamine Verbindungen B) eingesetzt, die keine in Abwesenheit von Feuchtigkeit gegenüber Anhydridgruppen reaktionsfähige Gruppen aufweisen, und deren blockierte Aminogruppen ausschließlich aus Hexahydropyrimidin-, Tetrahydroimidazol, Aldimin-, Ketimin- und/oder Oxazolangruppen der genannten Art bestehen. Die bevorzugten, so hergestellten erfindungsgemäßen Kombinationen enthalten 40 bis 90 Gew.-Teile an Copolymerisaten A) und 10 bis 60 Gew.-Teile Hexahydropyrimidin-, Tetrahydroimidazol-, Ketimin-, Aldimin- bzw. Oxazolangruppen aufweisende Verbindungen B).

Die Mengenverhältnisse der Einzelkomponenten A) und B) werden im allgemeinen so gewählt, daß auf jede blockierte Aminogruppe der Komponente B) insgesamt 0,2 bis 8, vorzugsweise 0,5 bis 4 und insbesondere 0,8 bis 2 Carbonat- und Anhydridgruppen der Komponente A) entfallen. Im allgemeinen wird man einen höheren Überschuß an den letztgenannten Gruppen innerhalb der genannten Bereiche dann wählen, wenn die übrigen Komponenten reaktive Gruppe aufweisen, die in Abwesenheit von Feuchtigkeit mit Carbonat- oder Säureanhydridgruppen reagieren. Hierzu gehören insbesondere primäre oder sekundäre Aminogruppen, die beispielsweise neben den blockierten Aminogruppen in der Komponente B) vorliegen können und auch alkoholische Hydroxylgruppen, die in der Komponente B) neben den blockierten Aminogruppen vorhanden sein können. Im allgemeinen sind jedoch alkoholische Hydroxylgruppen unter den Bedingungen des erfindungsgemäßen Verfahrens (Raumtemperatur) gegenüber Carbonat- und Säureanhydridgruppen weitgehend inert, so daß die Hydroxylgruppen nur dann in Betracht gezogen werden müssen, wenn sie in Form von schwerflüchtigen Alkoholen zum Einsatz gelangen, die bei der Verwendung der erfindungsgemäßen Kombinationen nicht verdunsten und, beispielsweise bei höheren Temperaturen während des Aushärtens von Beschichtungen als Reaktionspartner für die Säureanhydridgruppen der Komponente A) in Betracht kommen.

Insbesondere, wenn als Komponente B) solche Verbindungen eingesetzt werden, die neben den blockierten Aminogruppen freie primäre oder sekundäre Aminogruppen aufweisen, entstehen bei der Durchführung des erfindungsgemäßen, Verfahrens komplexe Gemische, in denen Amidgruppen (durch Reaktion der Säureanhydridgruppen mit Aminogruppen) oder Urethangruppen (durch Reaktion von Carbonatgruppen mit Aminogruppen) vorliegen. Der Begriff "Bindemittelkombination" umfaßt daher im Rahmen der Erfindung sowohl reine Gemische aus den Einzelkomponenten A) und B), sowie gegebenenfalls den übrigen Komponenten, in denen keine Umsetzungsprodukte der Einzelkomponenten vorliegen, als auch Systeme, in denen neben den Einzelkomponenten derartige Umsetzungsprodukte vorliegen, bzw., die im wesentlichen ausschließlich aus derartigen Umsetzungsprodukten bestehen. Bei allen Varianten des erfindungsgemäßen Verfahrens muß im übrigen darauf geachtet werden, daß das Molverhältnis von Säureanhydrid und Carbonatgruppen zu blockierten Aminogruppen nach Beendigung der gegebenenfalls spontan ablaufenden Reaktion zwischen Säureanhydrid- bzw. Carbonatgruppen einerseits und primären bzw. sekundären Aminogruppen andererseits bei 0,5:1 bis 4:1 liegt, wobei auch hier ein Überschuß an Säureanhydrid- bzw. Carbonatgruppen in Betracht gezogen werden sollte, falls Einzelkomponenten mitverwendet werden, die alkoholische Hydroxylgruppen aufweisen, die zwar, wie gesagt, unter den Bedingungen des erfindungsgemäßen Verfahrens weitgehend inert sind, bei der erfindungsgemäßen Verwendung jedoch neben den blockierten Aminogruppen als Reaktionspartner für die Säureanhydridgruppen in Betracht kommen.

Unter "gegenüber Säureanhydrid bzw. Carbonatgruppen reaktionsfähige Wasserstoffatome aufweisenden, blockierten Polyaminen B)" sind im Rahmen der Erfindung im übrigen nicht nur solche blockierte Polyamine der genannten Art zu verstehen, die reaktionsfähige Wasserstoffatome in chemisch gebundener Form enthalten, sondern vielmehr auch solche, die im Gemisch mit überschüssigem, zu ihrer Herstellung eingesetztem Polyamin bzw. Hydroxylamin vorliegen.

Bezüglich der Verwendbarkeit der erfindungsgemäßen Bindemittelkombinationen ist es weitgehend ohne Bedeutung, ob die gegebenenfalls spontan ablaufende Reaktion zwischen den Copolymerisaten A) und den gegenüber Säureanhydrid- bzw. Carbonatgruppen reaktionsfähigen Gruppen bereits vollständig zum Abschluß gekommen ist. Gewünschtenfalls ist es jedoch möglich, diese Reaktion vor der erfindungsgemäßen Verwendung durch kurzzeitiges Erhitzen auf 40 bis 100°C zum Abschluß zu bringen. Im übrigen erfolgt die Durchführung des erfindungsgemäßen Verfahrens vorzugsweise bei Raumtemperatur.

Bei der Durchführung des erfindungsgemäßen Verfahrens können selbstverständlich jeweils beliebige Gemische unterschiedlicher Einzelkomponenten A) und B) und gegebenenfalls C) und D) zur Anwendung gelangen.

Die erfindungsgemäßen Verfahrensprodukte sind im allgemeinen bei Raumtemperatur flüssig, sie sind in Abwesenheit von Wasser ausreichend lagerstabil und härten nach Applikation auf ein Substrat in Gegenwart von Luftfeuchtigkeit im allgemeinen rasch aus.

In der Regel werden bereits bei Raumtemperatur vernetzte Filme erhalten. Die an sich schon sehr rasche Aushärtung kann durch Trocknung bei höheren Temperaturen noch weiter beschleunigt werden. Dabei sind Temperaturen von 80 bis 130°C und Trockungszeiten von 10 bis 30 Minuten vorteilhaft.

Bei Verwendung von besonders hydrolysestabilen blockierten Aminogruppen kann diese forcierte Trocknung bei höheren Temperaturen erforderlich sein, um das optimale Eigenschaftsbild zu erhalten.

Die der erfindungsgemäßen Verwendung zuzuführenden, die erfindungsgemäßen Produkte als Bindemittel enthaltenden Lacke und Beschichtungsmassen können die in der Lacktechnologie üblichen Hilfs- und Zusatzstoffe, wie beispielsweise Pigmente, Füllstoffe, Verlaufshilfsmittel, Antioxidantien oder UV-Absorber enthalten.

Diese Hilfs- und Zusatzstoffe sollten möglichst wasserfrei sein und werden vorzugsweise bereits vor der Durchführung des erfindungsgemäßen Verfahrens den Ausgangskomponenten, im allgemeinen der Komponente A), einverleibt.

Die, die erfindungsgemäßen Produkte als Bindemittel enthaltenden Lacke und Beschichtungsmassen weisen in Abwesenheit von Feuchtigkeit im allgemeinen eine Topfzeit von 1 bis 48 Stunden auf. Durch Auswahl geeigneter Reaktionspartner kann die Topfzeit jedoch beliebig nach oben oder unten korrigiert werden. Die Lacke und Beschichtungsmassen können nach den üblichen Methoden, beispielsweise durch Spritzen, Streichen, Tauchen, Fluten, Gießen, Walzen auf beliebige, gegebenenfalls bereits vorbehandelte Untergründe wie z.B. Metall, Holz, Glas, Kermaik, Stein, Beton, Kunststoffe, Textilien, Leder, Pappe oder Papier aufgetragen werden.

In den nachfolgenden Beispielen beziehen sich alle Prozentzahlen und -teile, falls nicht anders vermerkt, auf das Gewicht.

## Beispiele

I Allgemeine Herstellungsvorschrift für die Carbonat- und Anhydridgruppen enthaltenden Copolymerisate $A_1$ bis $A_5$

In einem 3-l-Reaktionsgefäß mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 2 Stunden) und Teil III (Zugabe über einen Zeitraum von insgesamt 2,5 Stunden) zudosiert. Anschließend wird 2 Stunden bei der Reaktionstemperatur nachgerührt.

Die Reaktionstemperatur und die Zusammensetzungen der Teile I bis III sind in Tabelle I, zusammen mit den Kenndaten der erhaltenen Copolymerisate aufgeführt.

Tabelle I (Mengenangaben in g)

| Copolymerisate | $A_1$ | $A_2$ | $A_3$ | $A_4$ | $A_5$ |
|---|---|---|---|---|---|
| **Teil I** | | | | | |
| Butylacetat | 680 | 680 | 680 | | |
| Xylol | | | | 680 | 680 |
| **Teil II** | | | | | |
| Butylacrylat | 468 | | 351 | | |
| Methylmethacrylat | 293 | | 351 | 234 | 410 |
| Styrol | 257 | 351 | 199 | 328 | 351 |
| Butylmethacrylat | | 410 | | 469 | |
| Ethylacrylat | | 258 | | | |
| Ethylhexylmethacrylat | | | 117 | | 281 |
| Maleinsäureanhydrid | 94 | 76 | 59 | 117 | 82 |
| (2-Oxo-1,3-dioxolan-4-yl)-methylmethacrylat | 59 | 76 | 94 | 23 | 47 |
| **Teil III** | | | | | |
| tert.-Butylperoxy-2-ethylhexanoat (70 %ig) | 70 | 70 | 70 | 70 | 70 |
| Butylacetat | 79 | 79 | 79 | | |
| Xylol | | | | 79 | 79 |
| Reaktionstemperatur (°C) | 120 | 120 | 120 | 120 | 120 |
| Festgehalt (%) | 59,0 | 59,5 | 59,0 | 59,3 | 59,4 |
| Viskosität (23°C, mPa.s) | 1477 | 1615 | 1909 | 9423 | 17734 |

II) Herstellung der zur Vernetzung befähigten Komponenten B)

$B_1$

In einem 2-l-Reaktionsgefäß mit Rühr-, Kühl- und Heizvorrichtung werden unter $N_2$-Atmosphäre 513 g Cyclohexan und 456 g Isobutyraldehyd vorgelegt. Bei 10°C (Eisbadkühlung) werden 529,8 g 1-Amino-3-(methylamino)-propan zugetropft, 1 Stunde bei 10°C gerührt und anschließend so lange auf Rückflußtemperatur erhitzt, bis kein Wasser mehr abgespalten wird. Anschließend werden Cyclohexan und überschüssiger Isobutyraldehyd abdestilliert und der Hexahydropyrimidinvernetzer $B_1$ erhalten.

$B_2$

In einem 3-l-Reaktionsgefäß mit Rühr-, Kühl- und Heizvorrichtung werden unter $N_2$-Atmosphäre 680 g Isophorondiamin, 1000 g Methylisobutylketon und 560 g Toluol so lange am Wasserabscheider unter Rückfluß erhitzt, bis die theoretische Wassermenge abgetrennt ist (144 g bzw. bis sich kein Wasser mehr abscheidet). Anschließend werden Toluol und überschüssiges Methylisobutylketon abdestilliert und der Bisketiminvernetzer $B_2$ erhalten.

$B_3$

a) In einem 4-l-Reaktionsgefäß mit Rühr-, Kühl- und Heizvorrichtung werden unter $N_2$-Atmosphäre 1050 g Diethanolamin und 615 g Cyclohexan vorgelegt. Bei Raumtemperatur werden dann 1408 g 2-Ethylhexanal zugetropft, wobei die Temperatur langsam ansteigt. Es wird so lange bei Rückflußtemperatur gehalten, bis die Wasserabscheidung beendet ist. Anschließend werden Cyclohexan und überschüssiges 2-Ethylhexanal abdestilliert. Man erhält ein Oxazolan der Vorstufe $B_3$a).

b) Herstellung von $B_3$

In einem Reaktionsgefäß mit Rühr-, Kühl- und Heizvorrichtung werden unter $N_2$-Atmosphäre 200,6 g eines Isocyanuratgruppen aufweisenden Polyisocyanats auf Basis von Hexamethylendiisocyanat, welches im wesentlichen aus N,N′,N″-Tris-(6-isocyanatohexyl)-isocyanurat besteht und 207 g Butylacetat vorgelegt und auf 60°C erwärmt. Nach dem Zutropfen von 286,7 g der Oxazolanvorstufe $B_3$a) wird noch 10 Stunden bei 70°C gehalten. Man erhält eine 70 %ige Lösung des im statistischen Mittel 3 Oxazolangruppen enthaltenden Vernetzers $B_3$.

III. Herstellung der erfindungsgemäßen Bindemittelkombinationen

Die Copolymerisate A), Vernetzer B) und gegebenenfalls Komponente C) und D) werden bei Raumtemperatur miteinander vermischt und gegebenenfalls durch Zugabe eines organischen Lösungs- bzw. Verdünnungsmittels auf eine verarbeitungsfähige Viskosität eingestellt.

Die Filme werden mit einem Filmzieher auf entfettete Stahlbleche aufgezogen, wobei die Filmstärke der Naßfilme 150 bis 180 µm beträgt. Nach Alterung, d.h. 24 Stunden Trocknung bei Raumtemperatur erhält man vernetzte Filme mit sehr guter Filmmechanik und Filmoptik.

Die angegebenen Lösungsmittelfestigkeiten wurden durch einen Wischtest mittels eines Methylisobutylketon getänkten Wattebausches geprüft. Angegeben wird die Zahl der Doppelhübe, nach denen der Film ohne sichtbare Veränderung bleibt. Mehr als 200 Doppelhübe wurden nicht ausgeführt.

In der folgenden Tabelle II werden die Zusammensetzungen der Bindemittelkombinationen und die Lösungsmittelfestigkeit als Grad der Vernetzung aufgeführt.

Tabelle II (Mengenangaben in g)

| Verwendungsbeispiel | 1 | 2 | 3 | 4 | 5 |
|---|---|---|---|---|---|
| Komponente A) | 50,0 g $A_1$ | 50,0 g $A_2$ | 50,0 g $A_3$ | 50,0 g $A_4$ | 50,0 g $A_5$ |
| Komponente B) | 2,3 g $B_1$ | 2,2 g $B_1$ | 2,0 g $B_1$ | 2,3 g $B_1$ | 2,0 g $B_1$ |
| Butylacetat | 8,0 g | 8,0 g | 8,0 g | 16 g | 25 g |
| Standzeit | >6 h | >6 h | >6 h | >6 h | >6 h |
| MIBK-Wischtest nach 24 h Raumtemperatur Anzahl der Doppelhübe | 100 | 120 | 100 | 140 | 160 |
| Molverhältnis (Anhydrid- und Carbonatgruppen): NH (nach hydrolytischer Freisetzung) | 1:1 | 1:1 | 1:1 | 1:1 | 1:1 |

**Tabelle II** (Mengenangaben in g) (Fortsetzung)

| Verwendungsbeispiel | 6 | 7 | 8 | 9 | 10 |
|---|---|---|---|---|---|
| Komponente A) | 50,0 g $A_1$ | 50,0 g $A_2$ | 50,0 g $A_3$ | 50,0 g $A_4$ | 50,0 g $A_5$ |
| Komponente B) | 5,5 g $B_2$ | 5,0 g $B_2$ | 4,5 g $B_2$ | 5,5 g $B_2$ | 4,5 g $B_2$ |
| Butylacetat | 12,5 g | 12,5 g | 12,5 g | 20,0 g | 25,0 g |
| Standzeit | >6 h | >6 h | >6 h | >6 h | >6 h |
| MIBK-Wischtest nach 24 h Raumtemperatur Anzahl der Doppelhübe | 140 | 120 | 150 | 200 | 200 |
| Molverhältnis (Anhydrid- und Carbonatgruppen): NH (nach hydrolytischer Freisetzung) | 1:1 | 1:1 | 1:1 | 1:1 | 1:1 |

Tabelle II (Mengenangaben in g) (Fortsetzung)

| Verwendungsbeispiel | 11 | 12 | 13 | 14 | 15 |
|---|---|---|---|---|---|
| Komponente A) | 50,0 g $A_1$ | 50,0 g $A_2$ | 50,0 g $A_3$ | 50,0 g $A_4$ | 50,0 g $A_5$ |
| Komponente B) | 17,5 g $B_3$ | 16,0 g $B_3$ | 15,0 g $B_3$ | 18,0 g $B_3$ | 15,0 g $B_3$ |
| Butylacetat | 25,0 g | 25,0 g | 25,0 g | 30,0 g | 40,0 g |
| Standzeit | >6 h | >6 h | >6 h | >6 h | >6 h |
| MIBK-Wischtest nach 24 h Raumtemperatur Anzahl der Doppelhübe | 200 | 200 | 200 | 200 | 200 |
| Molverhältnis (Anhydrid- und Carbonatgruppen): NH (nach hydrolytischer Freisetzung) | 1:1 | 1:1 | 1:1 | 1:1 | 1:1 |

**Patentansprüche**

1. Unter dem Einfluß von reuchtigkeit aushärtbare Bindemittelkombinationen enthaltend

   A) 30 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1.500 bis 75.000, welches gegenüber Aminogruppen im Sinne einer Additionsreaktion reaktionsfähige Gruppen chemisch eingebaut enthält,

   und

   B) 1 bis 70 Gew.-Teile einer Polyamin-Komponente, bestehend aus mindestens einem organischen Polyamin mit blockierten Aminogruppen, ausgewählt aus der Gruppe bestehend aus Aldimin-, Ketimin-, Oxazolan-, Hexahydropyrimidin- und Tetrahydroimidazolgruppen aufweisenden Verbindungen,

   dadurch gekennzeichnet, daß die Copolymerisate der Komponente A) sowohl intramolekulare, durch Copolymerisation von Itaconsäure- oder Maleinsäureanhydrid eingebaute Carbonsäureanhydridgruppen als auch Carbonatgruppen der Formeln

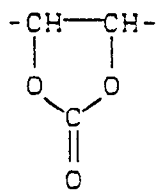

und/oder

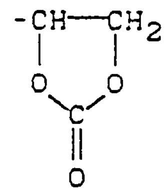

   in chemisch gebundener Form enthalten, wobei das Anhydridäquivalentgewicht der Copolymerisate bei 327 bis 9.800 und das Carbonatäquivalentgewicht der Copolymerisate bei 465 bis 18.600 liegt, und wobei in den Bindemittelkombinationen auf jede blockierte Aminogruppe insgesamt 0,2 bis 8 Anhydrid- und Carbonatgruppen entfallen.

2. Bindemittelkombinationen gemäß Anspruch 1, dadurch gekennzeichnet, daß die Copolymerisate der Komponente A) durch radikalisch initiierte Copolymerisation erhaltene Copolymerisate aus

   a) 1 bis 30 Gew.-Teilen copolymerisierbaren, Anhydridgruppen enthaltenden Monomeren,

   b) 1 bis 40 Gew.-Teilen copolymerisierbaren, Carbonatgruppen enthaltenden Monomeren, sowie

   c) 30 bis 98 Gew.-Teilen sonstigen copolymerisierbaren Monomeren der allgemeinen Formeln I, II, III

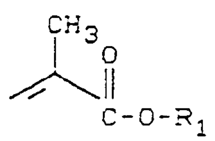

,

I

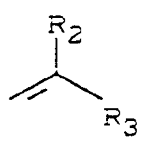

,

II

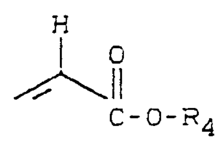

,

III

   darstellen, wobei

   $R_1$ für einen linearen oder verzweigten aliphatischen Kohlenwasserstoffrest mit 1 bis 18 Kohlenstoffatomen oder einen cycloaliphatischen Kohlenwasserstoffrest mit 5 bis 10 Kohlenstoffatomen steht,

   $R_2$ für Wasserstoff, eine Methyl-, Ethyl-, Chlor- oder Fluorgruppe steht,

   $R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff, gegebenenfalls Etherbrücken aufweisende, Alkylsubstituenten mit 1 bis 6 Kohlenstoffatomen tragen, steht, und

   $R_4$ bezüglich seiner Bedeutung der für $R_1$ gemachten Definition entspricht, jedoch mit $R_1$ nicht identisch sein muß.

3. Bindemittelkombinationen gemäß Anspruch 1 und 2, dadurch gekennzeichnet, daß in den Copolymerisaten der Komponente A) als carbonatfunktionelles Monomer (2-Oxo-1,3-dioxolan-4-yl)-methylmethacrylat in copolymerisierter Form vorliegt,

4. Bindemittelkombinationen gemäß Anspruch 1 bis 3, dadurch gekennzeichnet, daß sie als weitere Komponenten
   C) Katalysatoren
   und/oder
   D) weitere Hilfs- und Zusatzmittel
   enthalten.

5. Verfahren zur Herstellung von Bindemittelkombinationen gemäß Anspruch 1 bis 4, dadurch gekennzeichnet, daß man die Ausgangskomponenten A) und B), gegebenenfalls unter Hinzufügung der zusätzlichen Komponenten C) und/oder D), miteinander vermischt.

6. Verwendung der Bindemittelkombinationen gemäß Anspruch 1 bis 4 als oder in, unter dem Einfluß von Feuchtigkeit aushärtbaren, Beschichtungsmitteln und Dichtmassen.

## Claims

1. Moisture-curing binder combinations containing
   A) 30 to 99 parts by weight of a copolymer component consisting of at least one copolymer of olefinically unsaturated compounds having a weight average molecular weight of 1,500 to 75,000 which contain cemically incorporated groups reactive to amino groups in an addition reaction,
   and
   B) 1 to 70 parts by weight of a polyamine component consisting of at least one organic polyamine containing blocked amino groups selected from the group consisting of compounds containing aldimine, ketimine, oxazolane, hexahydropyrimidine and/or tetrahydroimidazole groups,
   characterized in that the copolymers of component A) contain both intramolecular carboxylic anhydride groups incorporated by copolymerization of itaconic or maleic anhydride and also carbonate groups corresponding to the formulae

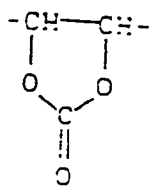

and/or

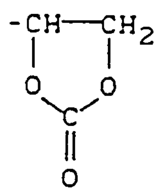

in chemically bound form, the anhydride equivalent weight of the copolymers being from 327 to 9,800 and the carbonate equivalent weight of the copolymers being 465 to 18,600 and a total of 0.2 to 8 anhydride and carbonate groups being present for each blocked amino group in the binder combinations.

2. Binder combinations as claimed in claim 1, characterized in that the copolymers of component A) are copolymers obtained by radical-initiated copolymerization of
   a) 1 to 30 parts by weight copolymerizable monomers containing carbonate groups,
   b) 1 to 40 parts by weight copolymerizable monomers containing anhydride groups and
   c) 30 to 98 parts by weight other copolymerizable monomers corresponding to general formulae I, II, III

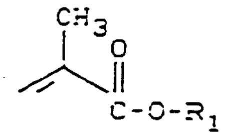 , 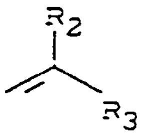 , 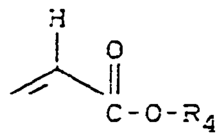 ,

I II III

in which

$R_1$ is a linear or branched, aliphatic $C_{1-18}$ hydrocarbon radical or a cycloaliphatic $C_{5-10}$ hydrocarbon radical,

$R_2$ is hydrogen, a methyl or ethyl group or a chlorine or fluorine atom,

$R_3$ is an aromatic $C_{6-12}$ hydrocarbon radical (including aromatic radicals containing aliphatic substituents), a nitrile group, a $C_{2-9}$ carboxylate group, a $C_{2-7}$ alkoxy group or an amino carbonyl group optionally bearing at the nitrogen $C_{1-6}$ alkyl substituents optionally containing ether bridges and

$R_4$ corresponds in its meaning to the definition of $R_1$, but need not be identical with $R_1$.

**3.** Binder combinations as claimed in claims 1 and 2, characterized in that (2-oxo-1,3-dioxolan-4-yl)-methyl methacrylate in copolymerized form is present as carbonate-functional monomer in the copolymers of component A).

**4.** Binder combinations as claimed in claims 1 to 3, characterized in that they contain as further components
C) catalysts
and/or
D) other auxiliaries and additives.

**5.** A process for the production of the binder combinations claimed in claims 1 to 4, characterized in that starting components A) and B) are mixed together, optionally with addition of the other components C) and D).

**6.** The use of the binder combinations claimed in claims 1 to 4 as, or in, moisture-curing coating compositions and sealing compounds.

## Revendications

**1.** Combinaisons de liants durcissables sous l'influence de l'humidité contenant

A) 30 à 99 parts en poids d'un composant copolymère composé d'au moins un copolymère de composés oléfiniquement insaturés avec un poids moléculaire déterminé comme une moyenne pondérale de 1.500 à 75.000 qui contient des groupes incorporés chimiquement, capables de réagir avec les groupes amino dans le sens d'une réaction d'addition,

et

B) 1 à 70 parts en poids d'un composant polyamine composé d'au moins une polyamine organique ayant des groupes amino bloqués, choisie parmi le groupe comprenant les composés présentant des groupes aldimine, cétimine, oxazolane, hexahydropyrimidine et tetrahydro-imidazole,

caractérisées en ce que les copolymères du composant A) contiennent sous forme chimiquement liée tant des groupes intramoléculaires d'anhydrides d'acide carboxylique incorporés par copolymérisation de l'anhydride d'acide itaconique ou d'acide maléique que des groupes carbonate de formule

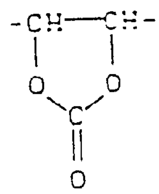

et/ou

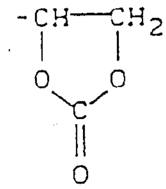

le poids d'équivalent anhydride des copolymères allant de 327 à 9.800 et le poids d'équivalent carbonates des copolymères allant de 465 à 18.600, 0,2 à 8 groupes anhydride et carbonate au total étant attribués à chaque groupe amino bloqué dans les combinaisons de liants.

**2.** Combinaisons de liants selon la revendication 1, caractérisées en ce que les copolymères du composant A) sont des copolymères obtenus par copolymérisation initiée radicalement à partir de

a) 1 à 30 parts en poids de monomères copolymérisables contenant des groupes anhydride,

b) 1 à 40 parts en poids de monomères copolymérisables contenant des groupes carbonate

et

c) 30 à 98 parts en poids d'autres monomères copolymérisables de formules générales I, II, III

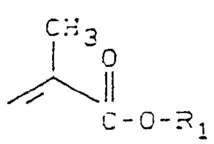 ,

I

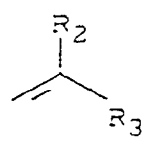 ,

II

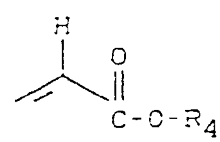 ,

III

dans lesquelles

$R_1$ désigne un radical hydrocarbure aliphatique linéaire ou ramifié avec 1 à 18 atomes de carbone ou un radical hydrocarbure cycloaliphatique avec 5 à 10 atomes de carbone,

$R_2$ désigne l'hydrogène, un groupe méthyle, éthyle, le chlore ou le fluor,

$R_3$ désigne un radical hydrocarbure aromatique avec 6 à 12 atomes de carbone (il faut également entendre par là les radicaux aromatiques présentant des substituants aliphatiques), un groupe nitrile, un groupe carboxylate avec 2 à 9 atomes de carbone, un groupe alcoxy avec 2 à 7 atomes de carbone ou un groupe aminocarbonyle qui porte éventuellement sur l'azote des alkylsubstituants avec 1 à 6 atomes de carbone présentant éventuellement des ponts d'éther, et

$R_4$ a la même définition que $R_1$ mais ne doit pas nécessairement être identique à $R_1$.

**3.** Combinaisons de liants selon les revendications 1 et 2 caractérisées en ce que, dans les copolymères du composant A), le (2-oxo-1,3-dioxolan-4-yl)-méthylméthacrylate sous forme copolymère est présent comme monomère à fonction carbonate.

**4.** Combinaisons de liants selon les revendications 1 à 3 caractérisées en ce qu'elles contiennent comme autres composants

C) des catalyseurs

et/ou

D) d'autres additifs et adjuvants.

**5.** Procédé de préparation de combinaisons de liants selon les revendications 1 à 4, caractérisé en ce que les composants de départ A) et B) sont mélangés l'un à l'autre, éventuellement en ajoutant des composants supplémentaires C) et/ou D).

**6.** Mise en oeuvre de combinaisons de liants selon les revendications 1 à 4 comme ou dans des agents d'enduction et des masses d'étanchéité durcissables sous l'effet de l'humidité.